# EUROPÄISCHE PATENTSCHRIFT

(11) **EP 2 201 386 B1**
(45) Veröffentlichungstag und Bekanntmachung des Hinweises auf die Patenterteilung: **19.01.2011**
(21) Anmeldenummer: 08785953.4
(22) Anmeldetag: 07.07.2008
(51) Int. Cl.: G01P 1/04, G01P 1/02, G01P 3/44, F16D 1/033, G01P 3/488, F16D 1/076

(54) **KUPPLUNGSVORRICHTUNG, INSBESONDERE FÜR EINE SENSOREINRICHTUNG**
COUPLING DEVICE, PARTICULARLY FOR A SENSOR UNIT
DISPOSITIF DE COUPLAGE EN PARTICULIER POUR UN SYSTÈME DE CAPTEUR

(30) Priorität: 03.09.2007 DE 102007041849
(43) Veröffentlichungstag der Anmeldung: 30.06.2010
(73) Patentinhaber: Robert Bosch GmbH, 70442 Stuttgart (DE)
(72) Erfinder: KULL, Bernhard, 73630 Remshalden (DE); EHRHARDT, Uwe, 73760 Ostfildern (DE); SPIESSBERGER, Michael, 71384 Weinstadt (DE); WAIBLER, Matthias, 73630 Remshalden-hebsack (DE)
(86) Internationale Anmeldenummer: PCT/EP2008/058772
(87) Internationale Veröffentlichungsnummer: WO 2009/030543

(56) Entgegenhaltungen:
- EP-A- 1 010 612
- DE-A1- 3 904 158
- DE-B- 1 012 782
- DE-C- 220 280
- US-A- 4 060 007

## Beschreibung

### Stand der Technik

Die Erfindung geht aus von einer Kupplungsvorrichtung, insbesondere für eine Sensoreinrichtung, nach der Gattung des unabhängigen Anspruchs. Aus der DE 450 249 ist bereits ein Zahnradgetriebe mit zwei gleichzeitig ablaufenden Zahneingriffen bekannt. Die Zahnräder der beiden Zahnradpaare sind jeweils bezüglich der Eingriffsstellung so gegeneinander versetzt, dass bei dem einen Zahnradpaar ein Zahn am Anfang der Eingriffsstrecke steht, wenn beim anderen Zahnradpaar ein Zahn am Ende der Eingriffsstrecke steht. Verschmutzungen zwischen den Zahnrädern können zu unerwünschten axialen Verschiebungen führen.

Aus DE 220286 C ist eine Klauenkupplung mit zugespitzten Klauen zum Einrücken der Kupplung im Zustand der Ruhe bekannt. Aus DE 10 12 782 B ist eine Klauenkupplung zum Kuppeln einer rasch umlaufenden treibenden Welle mit einer getriebenen Welle bekannt. Aus DE 39 04 158 A1 ist ebenfalls eine Klauenkupplung bekannt. Aus der gattungsbildenden US 4, 060 007 sind Kupplungszähne bekannt, die abgeflacht sind und spitz zulaufen.

Es ist Aufgabe der vorliegenden Erfindung, die oben genannten Nachteile zumindest zu lindern. Diese Aufgabe wird gelöst durch die Merkmale des unabhängigen Anspruchs.

### Vorteile der Erfindung

Erfindungsgemäß besteht die Läuferverzahnung aus einem weicheren Material als die Mitnehmerverzahnung. Der Mitnehmer ist in der Regel unmittelbar mit der rotierenden Welle, beispielsweise des Vorderrades des Motorrades, verbunden. Um im Fehlerfall ein Blockieren der rotierenden Welle zu verhindern, wird durch die beschriebene Materialauswahl erreicht, dass bei einem Blockieren die Verzahnung abschert. Bei der gewählten Materialhärte wäre dies die Verzahnung des Läufers, der normalerweise mit dem Sensor in Verbindung steht. Dies würde die weitere Rotation beispielsweise des Vorderrads des Motorrads nicht unterbinden. Dadurch wird die Verkehrssicherheit erhöht.

Bei der erfindungsgemäßen Kupplungsvorrichtung nach den Merkmalen des unabhängigen Anspruchs dient der Freiraum zwischen Zahnspitze und Nutgrund zur Aufnahme einer eventuellen Verschmutzung. Weiterhin wird eine problemlose Montage der beiden Kupplungsteile, nämlich Läufer und Mitnehmer, zur Drehmomentübertragung durch selbsttätiges Ausrichtung während des Montagevorgangs erreicht. Dies lässt sich insbesondere dadurch realisieren, wenn die Zahnflanke der Läuferverzahnung bzw. der Mitnehmerverzahnung gegenüber der Senkrechten der Rotationsachse um einen bestimmten Winkel leicht geneigt ist. Wird der Läufer auf den Mitnehmer montiert, so trägt diese Neigung dazu bei, dass sich die beiden Kupplungselemente hin zur Rotationsachse selbsttätig ausrichten. Gleichzeitig wird das nötige Axialspiel ausgeglichen. Axialschubkräfte auf die drehmomentaufnehmende Seite werden verhindert.

In einer zweckmäßigen Weiterbildung ist vorgesehen, dass Läufer und/oder Mitnehmer auf einer Buchse gelagert werden. Die Buchse könnte beispielsweise aus nicht rostendem Stahl bestehen, während der Läufer aus einem Kunststoff mit guten Gleiteigenschaften aufgebaut ist wie beispielsweise besonders bevorzugt POM (Polyoximethylen, aus der Gruppe der Polyacetale). Bei der Verwendung einer Buchse zur Lagerung des Läufers eignet sich die Kupplungsvorrichtung insbesondere für die Raddrehzahlübertragung zu einer Sensorvorrichtung bei Motorrädern. So kann nämlich auf die bei Motorrädern übliche Distanzbuchse zurückgegriffen werden, ohne dass weitere große bauliche Veränderungen notwendig wären.

In einer zweckmäßigen Weiterbildung ist vorgesehen, dass der Läufer mit einer ein Magnetfeld beeinflussenden Einrichtung, insbesondere einem Zählkranz, ausgestattet ist. Die Kupplungsvorrichtung eignet sich besonders gut zur Übertragung der von einem Sensor zu erfassenden Drehzahl. Der Zählkranz kann unmittelbar mit dem Läufer verbunden werden, was eine einfache und somit kostengünstige Herstellung der Baueinheit begünstigt.

In einer zweckmäßigen Weiterbildung ist vorgesehen, dass ein Sensor die Magnetfeldänderung, welche vom Zählkranz hervorgerufen wird, erfasst. Der Sensor ist hierzu in einem Gehäuse befestigt, welches wiederum mit der Buchse in Verbindung steht. Dadurch lässt sich eine sehr kompakte Sensoranordnung zusammen mit der Kupplungsvorrichtung realisieren.

In einer zweckmäßigen Weiterbildung ist der Freiraum rechteckförmig ausgebildet. In diesem leicht zu fertigendem Freiraum lassen sich besonders gut mögliche Verschmutzungen aufnehmen, ohne dass die Funktion beeinträchtigt wird.

Weitere zweckmäßige Weiterbildungen ergeben sich aus weiteren abhängigen Ansprüchen und aus der Beschreibung.

### Beschreibung des Ausführungsbeispiels

Ein Ausführungsbeispiel der Kupplungsvorrichtung, insbesondere für eine Sensoreinrichtung, ist in der Zeichnung dargstellt und wird nachfolgend näher beschrieben.

Es zeigen:
Die Figur 1 die perspektivische Ansicht einer Sensoreinrichtung mit integrierter Kupplungsvorrichtung,
die Figur 2 die in Figur 1 gezeigte Sensoreinrichtung mit Kupplungsvorrichtung von der Rückseite aus gesehen,
die Figur 3 einen perspektivischer Halbschnitt durch die Kupplungsvorrichtung,
die Figur 4a eine perspektivische Teilansicht des Läufers,
die Figur 4b den Schnitt entlang der Schnittlinie A-A gemäß Figur 4a,
die Figur 4c eine Draufsicht auf einen Teil der Verzahnung des Läufers,
die Figur 5 eine perspektivische Gesamtansicht des Läufers sowie
die Figur 6 eine Seitenansicht der Kupplungsvorrichtung im montierten Zustand mit einer vergrößerten Detailansicht.

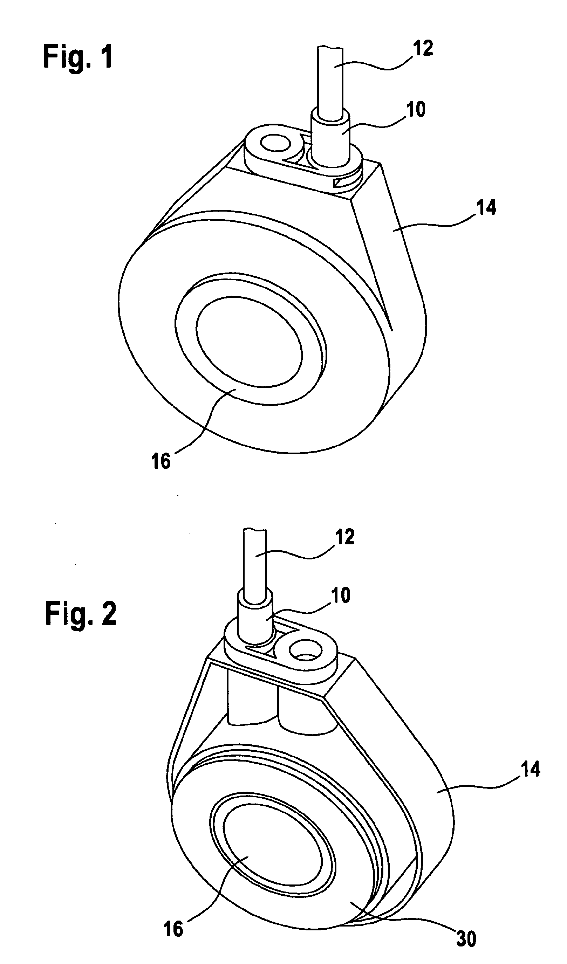

Ein über ein Kabel 12 anschließbarer Sensor 10 wird in einem Gehäuse 14 aufgenommen. Das Gehäuse 14 ist mit einer Buchse 16 verbunden. Aus Figur 2 wird ersichtlich, dass die Buchse 16 als Lagerung für einen Mitnehmer 30 dient, das heißt, der Mitnehmer 30 kann gegenüber der Buchse 16 rotieren. Der Mitnehmer 30 ist im Wesentlichen als rohrförmiges Teil ausgebildet, welches an der einen Seite durch einen Flansch begrenzt wird, während die andere Seite in einer Mitnehmerverzahnung 24 ausläuft. Die Mitnehmerverzahnung 24 weist in achsialer Richtung dreieckförmige Gestalt auf. Sie greift ein in eine Läuferverzahnung 22 eines Läufers 28. Der Läufer 28 ist ebenfalls rohrförmig ausgebildet und wird durch die Buchse 16 gelagert. Die Buchse 16 weist einen Anschlag 38 für den Läufer 28 auf an der der Läuferverzahnung 22 gegenüberliegenden Seite. Der Anschlag 38 ist in Form eines Flansches ausgeführt. Im mittleren Bereich des Läufers 28 ist ein radial weiter außen angeordneter zylinderförmiger Abschnitt vorgesehen, auf dem ein Zählkranz 34 angeordnet ist. Der Zählkranz 34 ist im Wesentlichen käfigförmig ausgebildet und weist in Umfangsrichtung in regelmäßigen Abständen Öffnungen auf. Die Buchse 16 ist an der vom Mitnehmer 30 entfernten Seite mit dem Gehäuse 14 verbunden. In einer zylinderförmigen Ausnehmung des Gehäuses 14 ist der Sensor 10 anordenbar, welcher im montierten Zustand in der Nähe des Zählkranzes 34 durch diesen hervorgerufene Magnetfeldänderungen detektiert. Aus dem vom Sensor 10 erfassten Magnetfeld wird die Drehzahl oder der Drehwinkel abgeleitet, mit dem sich Läufer 28, Mitnehmer 30 und die damit verbundene Welle gegenüber dem feststehendem Sensor 10 bewegen. Das Gehäuse 14 erstreckt sich über die gesamte axiale Länge der Kupplungsvorrichtung und schließt im Wesentlichen bündig mit dem Flansch des Mitnehmers 30 ab, wie auch in Figur 2 gezeigt.

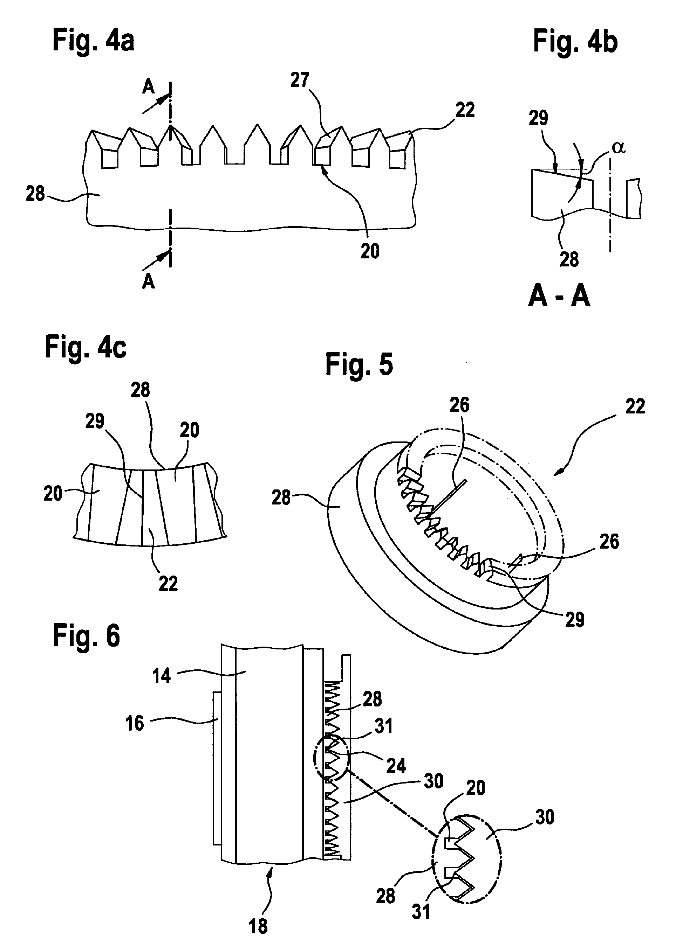

In Figur 4a ist die Verzahnung 22 des Läufers 28 näher gezeigt. Die Läuferverzahnungen 22 laufen axial im Wesentlichen in dreieckförmigen Spitzen aus. Die dreieckförmigen Spitzen gehen in Richtung zum Läufergrundkörper in achsparallele Abschnitte über, die somit - anstelle einer rein dreickförmigen Verzahnung - einen Freiraum 20 bilden und als sogenannter Nutgrund bezeichnet werden kann. Dieser Freiraum 20 ist im Wesentlichen rechteckfömig ausgebildet. Die Läuferverzahnung 22 ist in radialer Richtung zur Rotationsachse hin um einen Winkel α gegenüber der Senkrechten der Rotationsachse des Läufers 28 geneigt, wie dies aus Figur 4b hervorgeht. Dort sind zwei radial gegenüberliegende Zahnflanken 29 der Läuferverzahnung 22 im Schnitt gezeigt.

Die Zahnflanken 29 sind um einen Winkel α gegenüber der Senkrechten der Rotationsachse geneigt. Gemäß Figur 4c wird in der Draufsicht auf die Verzahnung 22 deutlich, dass der Umfang der Läuferverzahnung 22 mit dem Radius abnimmt. Entweder im Läufer 28 oder im Mitnehmer 30 sind Ausnehmungen 26 vorgesehen.

In der perspektiven Ansicht gemäß Figur 5 ist der gesamte, im Wesentlichen rohrförmig ausgeführte Läufer 28 gzeigt. Im Innenbereich des Läufers 28 erstrecken sich in achsialer Richtung zwei schlitzförmige Ausnehmungen 26. In diesen Ausnehmungen 26 könnte sich ebenfalls Schmutz ablagern. Über diese Ausnehmung 26 könnte auch die Schmierung der Lagerung von Läufer 28 und Buchse 16 erfolgen.

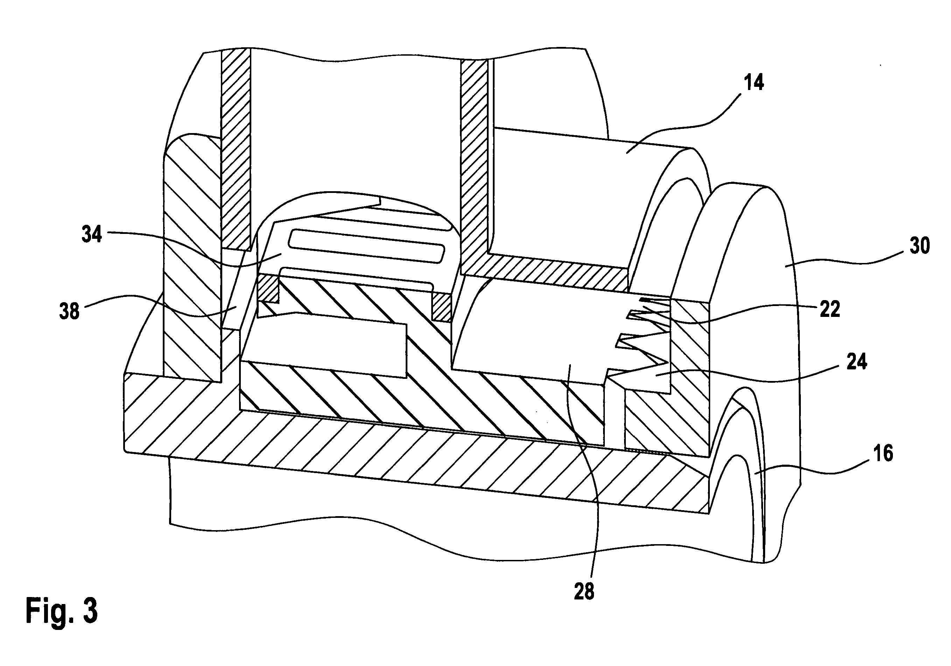

Wie in den Figuren 3 und 6 ersichtlich, greift die Läuferverzahnung 22 in die Mitnehmerverzahnung 24 ein. Die Mitnehmerverzahnung 24 ist genau abgestimmt auf den dreieckförmigen Teil der Läuferverzahnung 22. Anders als bei der Läuferverzahnung 22 ist bei der Mitnehmerverzahnung 24 jedoch kein Nutgrund bzw. rechteckförmiger Freiraum 20 vorgesehen. Statt dessen weist die Mitnehmerverzahnung 24 in achsialer Richtung eine reine Dreiecksform auf. Die Neigung um den Winkel α findet sich in entsprechender Weise auch in der Mitnehmerverzahnung 24 wieder zur selbsttätigen Zentrierung von Läufer 28 und Mitnehmer 30. Die Spitze 31 des Mitnehmers 30 kommt im Freiraum 20 zu liegen, das heisst, die Spitze 31 der Mitnehmerverzahnung 24 steht nicht in unmittelbarem mechanischen Kontakt mit der Läuferverzahnung 22. In diesem Freiraum 20 kann sich Schmutz ansammeln, der sich beispielsweise zwischen Läuferverzahnung 22 und Mitnehmerverzahnung 24 befindet und bei der Montage von Läufer 28 und Mitnehmer 30 dorthin gelangt.

Die gezeigte Kupplungsvorrichtung, bestehend aus zumindest Läufer 28 und Mitnehmer 30, wird vorzugsweise für die Übertragung einer Drehbewegung zur Erfassung durch eine Sensoreinrichtung an einem Motorrad verwendet. So ist der Mitnehmer 30 mit der Vorderachse des Motorrads verbunden. Die Parameter der Drehbewegung beispielsweise der Vorderachse oder einer sonstigen Achse sollen von dem Sensor 10 erfasst werden. Hierzu wird das von dem Mitnehmer 30 abgegriffene Drehmoment über die Mitnehmerverzahnung 24 und die Läuferverzahnung 22 auf den Läufer 28 übertragen. Der Läufer 28 trägt den Zählkranz 34, der aus einem ein Magnetfeld beeinflussenden Material, beispielsweise nicht rostender Stahl oder ferritischer Edelstahl, besteht. Der Zählkranz 34 rotiert zusammen mit dem Läufer 28. Genauso gut könnten auf dem Zählkranz 34 Magnetpole angeordnet sein, deren Drehbewegungen zu einem veränderten Magnetfeld führen. Diese auf dem Zählkranz 34 befindlichen Magnetpole könnten beispielsweise auch aus magnetischem Kunststoff bestehen. Anhand des erfassten Magnetfelds kann der Sensor 12 die Drehbewegung bzw. die Drehzahl des Läufers 28 ermitteln. Ebenso ist auch ein Sensorprinzip denkbar, bei dem im Sensor 12 zumindest ein magnetfelderzeugendes Element vorgesehen ist, dessen Magnetfeld von dem Zählkranz 34 durch den Wechsel von ferromagnetischem Material und nicht ferromagnetischem Material abhängig von der Drehbewegung verändert wird.

Der Läufer 28 ist vorzugsweise aus Kunststoff ausgeführt, welcher sehr gute Gleiteigenschaften aufweist. Hierzu eignet sich beispielsweise Polyoximethylen (POM) oder andere Kunststoffe aus der Gruppe der Polyacetale. Die guten Gleiteigenschaften sind deshalb notwendig, da der Läufer 28 auf der Buchse 16 gelagert ist und somit gegenüber der Buchse 16 rotiert. Weiterhin ist das Material des Läufers 28 so zu wählen, dass es weicher ist als das Material des Mitnehmers 30. Sollte es nämlich zu einem Blockieren der Kupplung kommen, so würde, da das Rad weiterhin den Mitnehmer 30 bewegt, bei Blockieren oder Verklemmen des Läufers 28 die Läuferverzahnung 22 gegenüber der Mitnehmerverzahnung 24 abscheren. Dadurch kann zuverlässig ein Blockieren der Welle bzw. des Rades verhindert werden.

Der Mitnehmer 30 ist beispielsweise als Tiefziehteil oder aus Stahl ausgeführt und weist somit eine höhere Festigkeit auf als der Läufer 28 aus Kunststoff. Die Distanzbuchse 16, welche als Lagerung für den Läufer 28 und den Mitnehmer 30 dient, ist beispielsweise aus nicht rostendem Stahl ausgeführt.

Entweder im Läufer 28 oder im Mitnehmer 30 können Ausnehmungen 26 vorgesehen sein. In diesen Ausnehmungen 26 könnte sich ebenfalls Schmutz ablagern. Über diese Ausnehmung 26 könnte auch die Schmierung der Lagerung erfolgen. Dank der nach innen abfallenden oberen Zahnflanke 29 lassen sich Läufer 28 und Mitnehmer 30 leichter in der korrekten Position montieren. Die um den Winkel α gegenüber der Senkrechten der Rotationsachse geneigten Zahnflanken 29 stellen eine Eigenzentrierung zum Mittelpunkt sicher. Weiterhin unterstützen die spitz zulaufenden Verzahnungen 22, 24 ein Fügen ohne Montagefehler. Unter diesem Gesichtspunkt ist es besonders vorteilhaft, dass zumindest eine Verzahnung 22, 24 eine Spitze aufweist, die die Gegenverzahnung in die gewünschte verzahnte Position in achsialer Richtung leitet.

Ein wichtiger Aspekt der Kupplungsvorrichtung besteht zudem darin, dass sich zwischen Läuferverzahnung 22 und Mitnehmerverzahnung 24 ein Freiraum 20 ausbildet. Dieser Freiraum könnte auch durch eine andere Geometrie der Verzahnungen 22, 24 gebildet werden. So könnten die Geometrien von Läuferverzahnung 22 und Mitnehmerverzahnung 24 vertauscht werden, das heißt der Nutgrund würde durch entsprechende Ausgestaltung der Mitnehmerverzahnung gebildet werden.

Die Herstellung der Kupplungsvorrichtung für eine Sensoreinrichtung erfolgt vorzugsweise, indem zuerst die Buchse 16 als Einlegeteil umspritzt wird. Mittels Spritzgießverfahren entsteht das Gehäuse 14, welches mit der Buchse 16 verbunden ist. Für das Gehäuse 14 wird üblicherweise Polyamid 66 (PA66) als Kunststoff verwendet. Anschließend wird der Läufer 28 auf die Buchse 16 aufgebracht. Danach wird der Sensor 10 im Gehäuse 14 verschraubt. Im letzten Schritt werden Läufer 28 und Mitnehmer 30 miteinander verbunden.

Die beschriebene Kupplungsvorrichtung für eine Sensoreinrichtung eignet sich insbesondere zur Drehzahlerfassung bei Motorrädern. Das Einsatzgebiet ist jedoch hierauf nicht beschränkt. Grundsätzlich könnte die beschriebene Einrichtung zur Kupplung- und Drehzahlauswertung beliebiger bewegter Wellen verwendet werden.

## Patentansprüche

1. Kupplungsvorrichtung, insbesondere für eine Sensoreinrichtung, umfassend zumindest einen Mitnehmer (30), der mit einer drehbaren Welle verbindbar ist, wobei der Mitnehmer (30) auf seiner Stirnseite eine Mitnehmerverzahnung (24) aufweist, die zur Übertragung einer Drehbewegung zu einem Läufer (28) in eine Läuferverzahnung (22) des Läufers (28) eingreift, wobei die Läuferverzahnung (22) und Mitnehmerverzahnung (24) so ausgebildet sind, dass sich ein Freiraum (20) ergibt, wenn Läuferverzahnung (22) und Mitnehmerverzahnung (24) miteinander im Eingriff sind, wobei in diesem Freiraum (20) Läuferverzahnung (22) und Mitnehmerverzahnung (24) nicht mechanisch in Kontakt sind, **dadurch gekennzeichnet, dass** die Läuferverzahnung (22) aus einem weicheren Material besteht als die Mitnehmerverzahnung (24).

2. Vorrichtung nach Anspruch 1, **dadurch gekennzeichnet, dass** Läuferverzahnung (22) und/oder Mitnehmerverzahnung (24) spitz zulaufend, vorzugsweise dreieckförmig, ausgebildet sind.

3. Vorrichtung nach einem der vorhergehenden Ansprüche, **dadurch gekennzeichnet, dass** der Freiraum (20) zumindest eine Spitze (31) zumindest einer der spitz zulaufenden Verzahnungen (22, 24) im verzahnten Zustand umgibt.

4. Vorrichtung nach einem der vorhergehenden Ansprüche, **dadurch gekennzeichnet, dass** Läufer (28) und/oder Mitnehmer (30) rohrförmig ausgebildet sind.

5. Vorrichtung nach einem der vorhergehenden Ansprüche, **dadurch gekennzeichnet, dass** zumindest eine obere Zahnflanke (29) der Läuferverzahnung (22) und/oder der Mitnehmerverzahnung (24) um einen Winkel gegenüber der Senkrechten der Rotationsachse des Läufers (28) geneigt ist hin zur Rotationsachse des Läufers (28).

6. Vorrichtung nach einem der vorhergehenden Ansprüche, **dadurch gekennzeichnet, dass** Läufer (28) und/oder Mitnehmer (30) auf einer Buchse (16) gelagert sind.

7. Vorrichtung nach einem der vorhergehenden Ansprüche, **dadurch gekennzeichnet, dass** der Läufer (28) mit einer ein Magnetfeld beeinflussenden Einrichtung, vorzugsweise ein Zählkranz (34), versehen ist.

8. Vorrichtung nach einem der vorhergehenden Ansprüche, **dadurch gekennzeichnet, dass** ein Sensor (10) vorgesehen ist, welcher eine Magnetfeldänderung erfasst zur Erfassung der Drehzahl des Mitnehmers (30).

9. Vorrichtung nach einem der vorhergehenden Ansprüche, **dadurch gekennzeichnet, dass** der Läufer (28) und/oder die Buchse (16) zumindest eine Ausnehmung (26) aufweist.

10. Vorrichtung nach einem der vorhergehenden Ansprüche, **dadurch gekennzeichnet, dass** der Freiraum (20) nutförmig, vorzugsweise rechteckförmig ausgebildet ist.

11. Vorrichtung nach einem der vorhergehenden Ansprüche, **dadurch gekennzeichnet, dass** die Buchse (16) mit einem Gehäuse (14) verbunden ist.

## Claims

1. Coupling device, in particular for a sensor device, comprising at least one driver (30) which can be connected to a rotatable shaft, with the driver (30) having on its end side a driver toothing (24) which engages into a rotor toothing (22) of a rotor (28) in order to transmit a rotational movement to the rotor (28), with the rotor toothing (22) and driver toothing (24) being designed such that a clearance (20) is formed when the rotor toothing (22) and driver toothing (24) are in engagement with one another, wherein in said clearance (20) the rotor toothing (22) and driver toothing (24) are not mechanically in contact, **characterized in that** the rotor toothing (22) is composed of a softer material than the driver toothing (24).

2. Device according to Claim 1, **characterized in that** the rotor toothing (22) and/or driver toothing (24) are of tapered, pointed design, preferably triangular design.

3. Device according to one of the preceding claims, **characterized in that** the clearance (20) surrounds at least one tip (31) of at least one of the tapered, pointed toothings (22, 24) in the meshed state.

4. Device according to one of the preceding claims, **characterized in that** the rotor (28) and/or driver (30) are/is of tubular design.

5. Device according to one of the preceding claims, **characterized in that** at least one upper tooth flank (29) of the rotor toothing (22) and/or of the driver toothing (24) is inclined towards the axis of rotation of the rotor (28) by an angle relative to the perpendicular of the axis of rotation of the rotor (28).

6. Device according to one of the preceding claims, **characterized in that** the rotor (28) and/or driver (30) are mounted on a bush (16).

7. Device according to one of the preceding claims, **characterized in that** the rotor (28) is provided with a device, preferably a counting ring (34), which influences a magnetic field.

8. Device according to one of the preceding claims, **characterized in that** a sensor (10) is provided which detects a change in magnetic field in order to detect the rotational speed of the driver (30).

9. Device according to one of the preceding claims, **characterized in that** the rotor (28) and/or the bush (16) has at least one recess (26).

10. Device according to one of the preceding claims, **characterized in that** the clearance (20) is of groove-like, preferably rectangular design.

11. Device according to one of the preceding claims, **characterized in that** the bush (16) is connected to a housing (14).

## Revendications

1. Dispositif de couplage, notamment pour un système de capteur, comprenant au moins un dispositif d'entraînement (30), qui peut être connecté à un arbre rotatif, le dispositif d'entraînement (30) présentant, sur son côté frontal, une denture du dispositif d'entraînement (24) qui, pour transférer un mouvement de rotation à un rotor (28), vient en prise dans une denture de rotor (22) du rotor (28), la denture de rotor (22) et la denture du dispositif d'entraînement (24) étant réalisées de telle sorte qu'un espace libre (20) soit obtenu lorsque la denture de rotor (22) et la denture du dispositif d'entraînement (24) sont en prise l'une avec l'autre, la denture de rotor (22) et la denture du dispositif d'entraînement (24) n'étant pas en contact mécanique dans cet espace libre (20), **caractérisé en ce que** la denture de rotor (22) se compose d'un matériau plus tendre que la denture du dispositif d'entraînement (24).

2. Dispositif selon la revendication 1, **caractérisé en ce que** la denture de rotor (22) et/ou la denture du dispositif d'entraînement (24) se terminent en pointe, de préférence en une forme triangulaire.

3. Dispositif selon l'une quelconque des revendications précédentes, **caractérisé en ce que** l'espace libre (20) entoure au moins une pointe (31) d'au moins l'une des dentures (22, 24) se terminant en pointe dans l'état engrené.

4. Dispositif selon l'une quelconque des revendications précédentes, **caractérisé en ce que** le rotor (28) et/ou le dispositif d'entraînement (30) sont réalisés sous forme tubulaire.

5. Dispositif selon l'une quelconque des revendications précédentes, **caractérisé en ce qu'**au moins un flanc de dent supérieur (29) de la denture de rotor (22) et/ou de la denture du dispositif d'entraînement (24) est incliné d'un certain angle par rapport à la verticale de l'axe de rotation du rotor (28) dans la direction de l'axe de rotation du rotor (28).

6. Dispositif selon l'une quelconque des revendications précédentes, **caractérisé en ce que** le rotor (28) et/ou le dispositif d'entraînement (30) sont montés sur une douille (16).

7. Dispositif selon l'une quelconque des revendications précédentes, **caractérisé en ce que** le rotor (28) est pourvu d'un dispositif influençant un champ magnétique, de préférence une couronne dentée (34).

8. Dispositif selon l'une quelconque des revendications précédentes, **caractérisé en ce qu'**un capteur (10) est prévu, lequel détecte une variation du champ magnétique pour détecter la vitesse de rotation du dispositif d'entraînement (30).

9. Dispositif selon l'une quelconque des revendications précédentes, **caractérisé en ce que** le rotor (28) et/ou la douille (16) présentent au moins un évidement (26).

10. Dispositif selon l'une quelconque des revendications précédentes, **caractérisé en ce que** l'espace libre (20) est réalisé sous forme de rainure, de préférence rectangulaire.

11. Dispositif selon l'une quelconque des revendications précédentes, **caractérisé en ce que** la douille (16) est connectée à un boîtier (14).
